(19) Europäisches Patentamt
European Patent Office
Office européen des brevets

(11) **EP 4 726 632 A1**

(12) **EUROPEAN PATENT APPLICATION**

(43) Date of publication:
**15.04.2026 Bulletin 2026/16**

(21) Application number: **24306657.8**

(22) Date of filing: **10.10.2024**

(51) International Patent Classification (IPC):
**G06Q 30/0201** $^{(2023.01)}$ **G06Q 50/06** $^{(2024.01)}$
**H04M 15/00** $^{(2024.01)}$

(52) Cooperative Patent Classification (CPC):
**G06Q 30/0201; G06Q 50/06; H04M 15/58;**
**H04W 4/24**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **REINHARD, Erik
35630 HEDE-BAZOUGES (FR)**

• **REDMANN, William
GLENDALE, 91205 (US)**
• **DEMARTY, Claire-Helene
35520 MONTREUIL LE GAST (FR)**
• **BLONDE, Laurent
35235 THORIGNE-FOUILLARD (FR)**
• **AUMONT, Franck
35770 VERN SUR SEICHE (FR)**
• **LE MEUR, Olivier
35160 TALENSAC (FR)**

(74) Representative: **Rittner, Karsten
Rittner & Partner
Patentanwälte mbB
Schiffgraben 17
30159 Hannover (DE)**

(54) **MULTI-USER ENERGY ACCOUNTING**

(57) Methods and apparatus for associating energy use with a data-stream passing through a device, or system or service center are provided, enabling reporting and control of energy from data centers or content delivery networks. In one embodiment, information is transmitted from a data center, comprising a number of customers associated with the data center, corresponding data rates for each of the number of customers and an energy for each of the number of customers. A total energy can be determined for all customers and for individual users. In another embodiment, an energy corresponding to an individual user within a set time interval can be determined and transmitted using the determined energy corresponding to the data center.

$$t = t_1, n_i = 1, E_{\text{center}}(t) = 0$$

Determine number of customers $N_i$

Determine data-rate $d(n_i, t)$ for customer $n_t$

Determine energy $E_{n_i}$ for customer $n_i$ at time $t$

$$E_{\text{center}}(t) = E_{\text{center}}(t) + E_{n_i}$$

$$n_i = n_i + 1$$

$n_i \leq N_i$

$t = t + 1$

$t \leq t_2$

Done with time interval $(t_1, t_2)$

Figure 3

## Description

### BACKGROUND

The described embodiments relate to the estimation of the energy used for individual customers of multi-user installations, including data centers, content distribution networks, Wi-Fi routers, and similar equipment.

### BRIEF SUMMARY

At least one of the present embodiments generally relates to a method or an apparatus for measuring energy for individual customers of multi-user installations.

According to a first aspect, there is provided a method. The method comprises steps for determining a number of customers associated with a data center, corresponding data rates for each of the number of customers and an energy for each of the number of customers at a plurality of times; determining an energy corresponding to the data center at a plurality of times for the number of customers over a specified time interval; and, transmitting information indicative of the determined energy.

According to another aspect, there is provided an apparatus. The apparatus comprises a processor and a memory. The processor can be configured to operate according to the aforementioned methods.

According to another general aspect of at least one embodiment, there is provided a device comprising an apparatus according to any of the embodiments; and at least one of (i) an antenna configured to receive a signal, the signal including the energy data, (ii) a band limiter configured to limit the received signal to a band of frequencies that includes the energy data, or (iii) a display configured to display an output representative of the energy data.

According to another general aspect of at least one embodiment, there is provided a computer program product comprising instructions which, when the program is executed by a computer, cause the computer to carry out any of the described embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

Figure 1 shows a relationship between power P and data rate d.
Figure 2 shows data-rate d and power P as function of time t.
Figure 3 shows one embodiment of a method under the described aspects.
Figure 4 illustrates one embodiment of an method under the described aspects.
Figure 5 illustrates one embodiment of an apparatus under the described aspects.

### DETAILED DESCRIPTION

In describing the various embodiments presented herein, certain terminology is used for convenience only and should not be considered as limiting such embodiments. In the drawings, the same reference numerals are employed for designating the same elements throughout the several figures and the present description.

Data transmission systems use significant amounts of energy, serving a potentially large number of customers. For reporting purposes, notably Scope 3 reporting as required by the European Union, it is important to determine the energy used for each customer. The present embodiments describe a method for determining the amount of energy associated with a single data-stream as it passes through a multi-user installation.

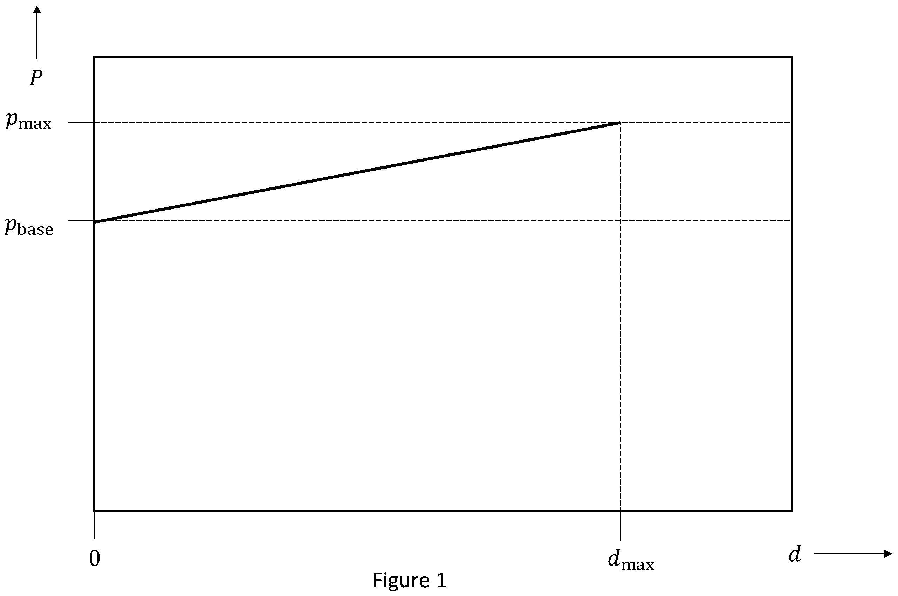

The reporting of energy consumption is desirable, as this gives a high-level measure of environmental impact. If one is interested in the energy used by a given device, then the device could be measured, either by a wall-plug that measures power- or energy-consumption, or by built-in measurement hardware. However, if the energy consumption of a given service is to be measured, a variety of complications may arise. A "service" in this instance could include broadcasting a television program, encoding a video in a datacenter, caching and serving a content by a content delivery network (CDN), receiving a file over fiber and transmitting it over Wi-Fi, the processing of data by an internet service provider, for example. Some devices involved in providing such services may include server racks, Wi-Fi routers, set-top boxes, repeaters, and other such equipment. These types of devices implicate that multiple data-streams may be processed at the same time; and, energy use and the presence of data are only weakly correlated, meaning that a device, system or center may have a fixed energy overhead which is independent of the amount of data transmitted, as shown in Figure 1.

For such devices, associating an amount of energy used to a given data stream is a non-trivial task. Further, such devices will still use a significant amount of energy even if no data passes through. The present embodiments therefore propose a solution for associating energy use with a data-stream passing through a device, or system or service center.

The devices and installations involved in the transmission of data (such as data centers, CDNs (content delivery networks), Wi-Fi-routers, etc.) can each be adequately modeled using a power model, whereby the power $P$ (in Watts) drawn relates to the data-rate $d$ (in *bits/second*) as follows:

$$P = p_{\text{base}} + \frac{p_{\text{max}} - p_{\text{base}}}{d_{\text{max}}} d$$

where $p_{\text{base}}$ is the base load which is always present (due to cooling requirements, losses incurred by power transformers, etc.), $p_{\text{max}}$ is the maximum power drawn, which occurs when the system functions at maximum capacity, i.e. with a data-rate $d_{\text{max}}$. Note that derived energy units can be used equivalently, including for example *kW, MW, kb/s, MB/s.*

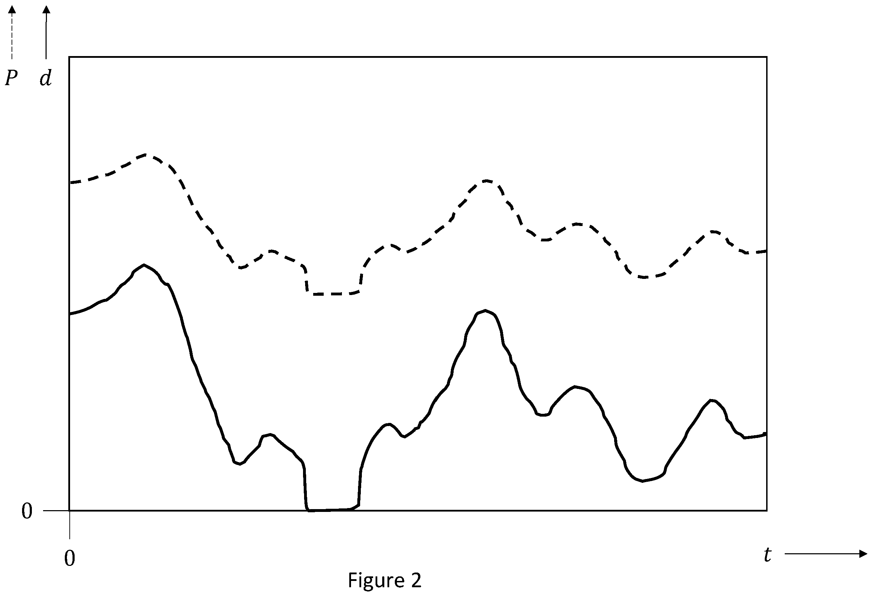

In the following it will be assumed that the data-rate d can vary over time, and that therefore the power drawn will vary over time as well, as shown in Figure 2. For a given time-interval $(t_1, t_2)$, the energy $E$ consumed (in *Watt-seconds,* or derived quantities such as *Wh, kWh*) can be determined as follows:

$$E(t_1, t_2) = \int_{t_1}^{t_2} P(t)\, dt$$

This can be rewritten as:

$$E(t_1, t_2) = \int_{t_1}^{t_2} \left( p_{\text{base}} + \frac{p_{\text{max}} - p_{\text{base}}}{d_{\text{max}}} d(t) \right) dt$$

which simplifies to:

$$E(t_1, t_2) = p_{\text{base}}(t_2 - t_1) + \frac{p_{\text{max}} - p_{\text{base}}}{d_{\text{max}}} \int_{t_1}^{t_2} d(t) dt$$

Thus, the energy used in the time interval $(t_1, t_2)$ consists of a fixed component, and a data-rate dependent component.

For a datacenter, internet service provider, content distribution network, and similar installations, the energy of the installation in time interval $(t_1, t_2)$ is therefore given by:

$$E_{\text{center}}(t_1, t_2) = E(t_1, t_2)$$

If there are $N_i$ customers in time interval $i = (t_1, t_2)$, then the data-rate $d(t)$ for any time between $t_1$ and $t_2$ witnessed in the installation can be attributed to each customer $n_i$ pro-rata, i.e.:

$$d(t) = \sum_{n_i=1}^{N_i} d(n_i, t) \le d_{\text{max}}$$

The energy used by the installation can be written as:

$$E_{\text{center}}(t_1, t_2) = p_{\text{base}}(t_2 - t_1) + \frac{p_{\max} - p_{\text{base}}}{d_{\max}} \int_{t_1}^{t_2} \sum_{n_i=1}^{N_i} d(n_i, t)\, dt$$

In addition, the energy used by customer $n_i$ is given by:

$$E_{n_i}(t_1, t_2) = \frac{p_{\text{base}}(t_2 - t_1)}{N_t} + \frac{p_{\max} - p_{\text{base}}}{d_{\max}} \int_{t_1}^{t_2} d(n_i, t)\, dt$$

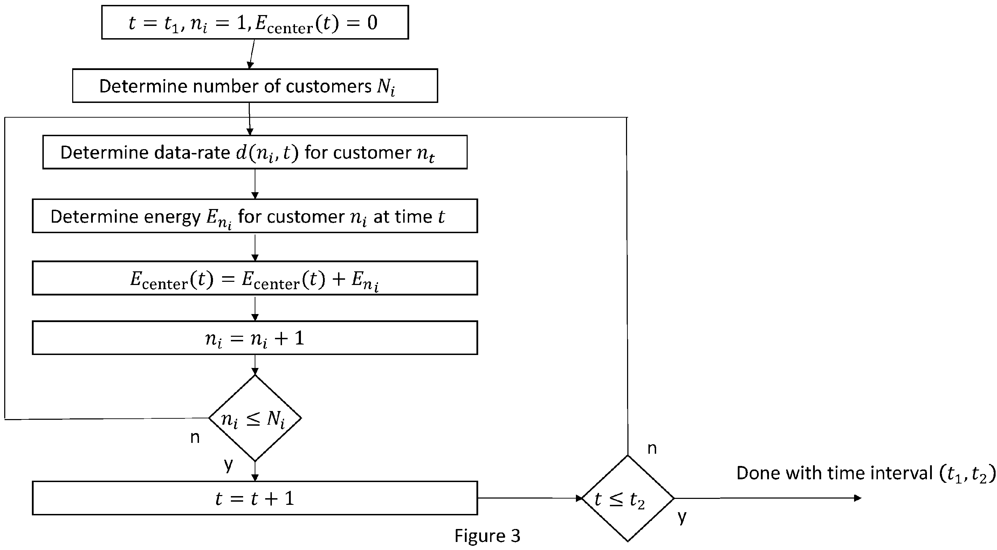

A flow-chart summarizing the procedure followed is shown in Figure 3.

Note that in the above equations the number of customers $N_i$ is assumed to remain constant over time interval $i$. If the number of customers changes, the start and end times of a time interval can correspond to the arrival or departure of a customer. Alternatively, the equations can be modified trivially to accommodate a varying number of customers for each time $t$ in a time interval $i$. For example, assuming that at time $t$ there are $N_t$ customers, then the energy for the center and the energy for customer $n_t$ are:

$$E_{\text{center}}(t_1, t_2) = p_{\text{base}}(t_2 - t_1) + \frac{p_{\max} - p_{\text{base}}}{d_{\max}} \int_{t_1}^{t_2} \sum_{n_t=1}^{N_t} d(n_t, t)\, dt$$

$$E_{n_t}(t_1, t_2) = \frac{p_{\text{base}}(t_2 - t_1)}{N_t} + \frac{p_{\max} - p_{\text{base}}}{d_{\max}} \int_{t_1}^{t_2} d(n_t, t)\, dt$$

The sum of energies used by all customers is equal to the energy used by the installation:

$$E_{\text{center}}(t_1, t_2) = \sum_{n_i=1}^{N_i} E_{n_i}(t_1, t_2)$$

Finally, if the data-rate $d(n_t, t)$ over time interval $(t_1, t_2)$ is constant for customer $n_t$, then the above equation can be simplified as follows:

$$E_{n_i}(t_1 t_2) = (t_2 - t_1)\left(\frac{p_{\text{base}}}{N_t} + \frac{p_{\max} - p_{\text{base}}}{d_{\max}} d(n_i, t)\right)$$

The above two equations for $E_{n_i}$ constitute a method whereby the data-rate along with the number of customers are the only two variables required to determine the energy used by a single customer at a given time interval. The remaining parameters are constants which depend on the configuration of the installation.

The values determined with this method may be reported in several different ways. For example, it would be possible to report energy-related information through IP-queries, for example by sending an HTTP request to an IP address with a specific pre-defined port. The values may also be attached as metadata to (video-) streams passing through each installation/center. In one example, this would allow an end-user to know the energy consumed during the transmission of the data he/she is consuming. Such data may also subsequently be sent back to the sender, for example to a broadcaster via a return-channel mechanism.

In a further example, in the context of mobile communications, the energy-usage data may be queried and supplied through appropriate interfaces as defined by 3GPP.

In a variant, it would be possible to consider the installation itself to be responsible for the fixed component, in which case the reporting for customer $n_t$ becomes:

$$E_{n_i}(t_1, t_2) = \frac{p_{\max} - p_{\text{base}}}{d_{\max}} \int_{t_1}^{t_2} d(n_i, t) dt$$

The component for which the installation itself is responsible is then:

$$E_{\text{installation}} = p_{\text{base}}(t_2 - t_1)$$

and the total energy used by the center is given by:

$$E_{\text{center}}(t_1, t_2) = E_{\text{installation}} + \sum_{n_i=1}^{N_i} E_{n_i}(t_1, t_2)$$

This variant could be useful for times when there are only a few users, or when there is no data flowing through the installation at all (i.e. there are no or too few users to attribute the fixed overhead to).

The mechanism of accounting disclosed in this variant is also applicable to personal devices such as in-home Wi-Fi routers. In this case, it may be assumed that there are several end-users who are using the internet at the same time, for example for streaming audio or video, downloading game data or using a telephone. Each of these activities will cause a certain data-rate, which may vary over time. The relationship between power and data-rate in a Wi-Fi-router is well-modeled by the plot in Figure 1, which means that accounting of energy use of a Wi-Fi router can be defined as:

$$E_{\text{router}} = E_{\text{fixed}} + \sum_{n_i=1}^{N_i} E_{n_i}(t_1, t_2)$$

where in this case $N_i$ refers to the number of applications sending or receiving data through the router in question. $E_{\text{router}}$ and $E_{\text{fixed}}$ are the energy used by the router and the non-data-dependent part of the energy consumed by the router respectively.

Devices that do not service multiple customers may also report their energy consumption. A television, for example, will typically receive a single stream of data at any one time. While the energy usage and reporting of the television as function of the display functionality has been described in a prior approach, the energy usage as function of the communication aspect of a television may be accounted for using the method described in the embodiments described here. The method is adapted to this use case by setting the number of customers to 1, i.e. $N_i = 1$. The energy to be reported is then given by:

$$E_{\text{television}} = p_{\text{base}}(t_2 - t_1) + \frac{p_{\max} - p_{\text{base}}}{d_{\max}} \int_{t_1}^{t_2} d(t) dt$$

whereby the constants may relate to the receiving and processing of data prior to display. Alternatively, they may relate to the full functionality of a television, noting that in the absence of signal, a television in the on-state consumes a non-trivial amount of energy. This variant may also apply to any other single-user device such as a set-top box.

For accounting purposes, the methods disclosed here provide a way to understand the energy used by a single center/device to service a single customer. This would help the development of instrumentation techniques that would enable the reporting of energy used for each application. Notably, the aim is to develop instrumentation tools that would enable an assessment of the energy used for the transmission of data from a source to a sender. For such tools to operate meaningfully, a solution such as the one presented in these described embodiments would be crucial.

Given that the centers and devices considered here each have a significant fixed energy overhead, which is independent of the amount of data that passes through the system, the methods presented here allow for flexibility as to how this fixed overhead is attributed.

The methods presented herein are essential components useful for Scope 3 reporting of data communication systems. It would allow any single- or multi-user installation to provide per-user information for energy reporting purposes.

The methods described herein are developed to be used in conjunction with approaches that would receive the information generated by the methods described here, and which will be subject to standardization. Further, the methods are written to respond to developments around reporting requirements as they relate to 3GPP.

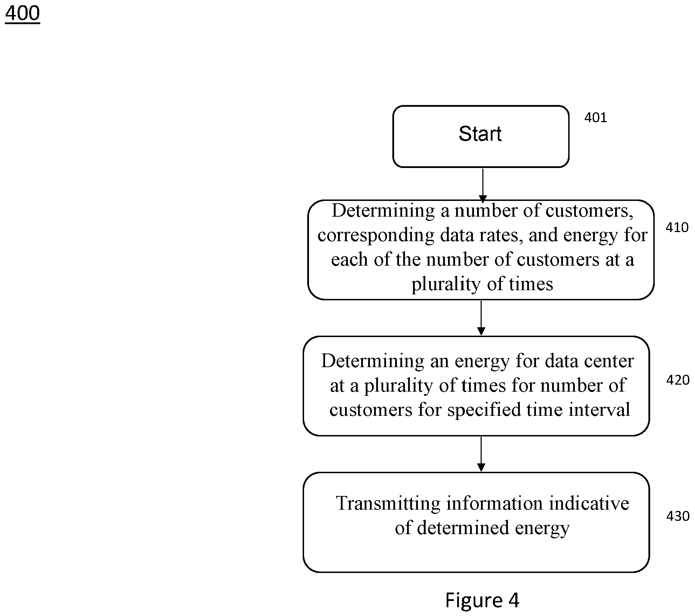

One embodiment of a method 400 under the general aspects described here is shown in Figure 4. The method commences at start block 401 and control proceeds from block 401 to block 410 for determining a number of customers associated with a data center, corresponding data rates for each of the number of customers and an energy for each of the number of customers at a plurality of times. Control proceeds from block 410 to block 420 for determining an energy corresponding to the data center at a plurality of times for the number of customers over a specified time interval. Control proceeds from block 420 to block 430 for transmitting information indicative of the determined energy.

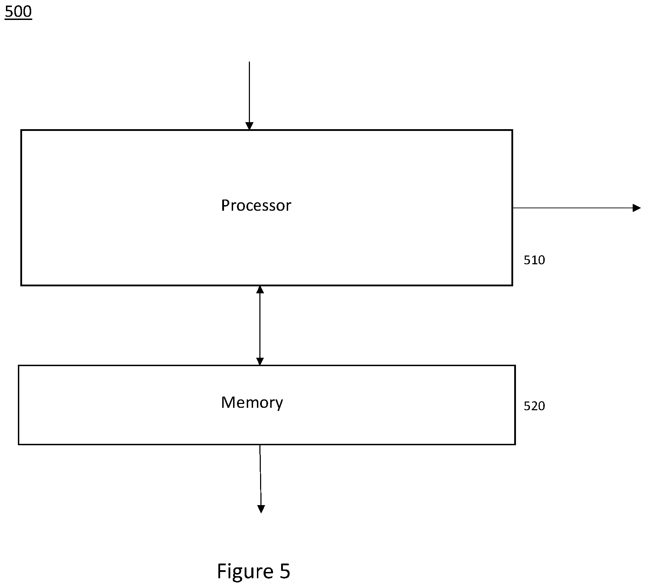

Figure 5 shows one embodiment of an apparatus 500 for measurement of energy for customers of multi-user installations. The apparatus comprises Processor 510 and can be interconnected to a memory 520 through at least one port. Both Processor 510 and memory 520 can also have one or more additional interconnections to external connections.

Processor 510 is also configured to either insert or receive information in a bitstream and, either compressing, encoding, or decoding using any of the described aspects.

One or more embodiments provide a computer program comprising instructions which when executed by one or more processors cause such processors to perform the methods according to any of the embodiments described above. One or more embodiments also provide a computer readable storage medium having stored thereon instructions for execution according to the methods described above.

One or more embodiments provide a computer readable storage medium having stored thereon data generated according to the methods described above. One or more embodiments also provide a method and apparatus for transmitting or receiving data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method, comprising:

    determining a number of customers associated with a data center, corresponding data rates for each of the number of customers and an energy for each of the number of customers at a plurality of times;

determining an energy corresponding to the data center at a plurality of times for the number of customers over a specified time interval; and,
transmitting information indicative of the energy determined.

2. An apparatus, comprising a memory and a processor, configured to perform:

determining a number of customers associated with a data center, corresponding data rates for each of the number of customers and an energy for each of the number of customers at a plurality of times;
determining an energy corresponding to the data center at a plurality of times for the number of customers over a specified time interval; and,
transmitting information indicative of the energy determined.

3. The method of Claim 1, further comprising determining an energy corresponding to an individual user within a set time interval using the energy determined corresponding to the data center.

4. The apparatus of Claim 2, further comprising determining an energy corresponding to an individual user within a set time interval using the energy determined corresponding to the data center.

5. A device comprising:

the apparatus according to any one of Claims 2 or 4; and
at least one of (i) an antenna configured to receive a signal, the signal including a data block, (ii) a band limiter configured to limit a received signal to a band of frequencies that includes data, and (iii) a display configured to display an output representative of the data block.

6. A non-transitory computer readable medium containing data content generated according to the method of any one of claims 1 or 3, or by an apparatus corresponding to any one of claims 2 or 4, for playback using a processor.

7. A signal comprising data generated according to the method of any one of claims 1 or 3, or by an apparatus corresponding to any one of claims 2 or 4, for playback using a processor.

8. A computer program product comprising instructions which, when the computer program product is executed by a computer, cause the computer to carry out the method of any one of claims 1 or 3.

Figure 1

Figure 2

EP 4 726 632 A1

$$t = t_1, n_i = 1, E_{\text{center}}(t) = 0$$

Determine number of customers $N_i$

Determine data-rate $d(n_i, t)$ for customer $n_t$

Determine energy $E_{n_i}$ for customer $n_i$ at time $t$

$$E_{\text{center}}(t) = E_{\text{center}}(t) + E_{n_i}$$

$$n_i = n_i + 1$$

$n_i \leq N_i$

n

y

$$t = t + 1$$

$t \leq t_2$

n

Done with time interval $(t_1, t_2)$

y

Figure 3

<u>400</u>

```
            ┌─────────────────────┐  401
            │        Start        │
            └─────────────────────┘
                       │
                       ▼
       ┌───────────────────────────────────┐
       │  Determining a number of customers, │  410
       │  corresponding data rates, and energy for │
       │  each of the number of customers at a │
       │         plurality of times          │
       └───────────────────────────────────┘
                       │
                       ▼
       ┌───────────────────────────────────┐
       │  Determining an energy for data center │
       │  at a plurality of times for number of │  420
       │  customers for specified time interval │
       └───────────────────────────────────┘
                       │
                       ▼
       ┌───────────────────────────────────┐
       │  Transmitting information indicative │  430
       │       of determined energy          │
       └───────────────────────────────────┘
```

Figure 4

EP 4 726 632 A1

| Processor | 510 |
| --- | --- |

| Memory | 520 |
| --- | --- |

500

Figure 5

Europäisches
Patentamt

European
Patent Office

Office européen
des brevets

# EUROPEAN SEARCH REPORT

**Application Number**

EP 24 30 6657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/188563 A1 (DANTRESSANGLE PATRICK [GB] ET AL) 3 July 2014 (2014-07-03) <br> * paragraph [0004] - paragraph [0008] * <br> * paragraph [0016] - paragraph [0043] * <br> ----- | 1-8 | INV. <br> G06Q30/0201 <br> G06Q50/06 <br> H04M15/00 |
| X | US 2020/057771 A1 (SHILTS ERIK [US] ET AL) 20 February 2020 (2020-02-20) <br> * paragraph [0003] - paragraph [0005] * <br> * paragraph [0021] - paragraph [0052] * <br> ----- | 1-8 | |

**TECHNICAL FIELDS SEARCHED (IPC)**

G06Q
H04W
H04M

The present search report has been drawn up for all claims

| Place of search | Date of completion of the search | Examiner |
|---|---|---|
| The Hague | 21 February 2025 | Moynihan, Maurice |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 30 6657

This annex lists the patent family members relating to the patent documents cited in  the above-mentioned European search report.
The members are as contained in the European Patent Office EDP file on
The European Patent Office is in no way liable for these particulars which are merely given for the purpose of information.

21-02-2025

| Patent document cited in search report | Publication date | Patent family member(s) | | Publication date |
|---|---|---|---|---|
| US 2014188563 A1 | 03-07-2014 | US | 2014188563 A1 | 03-07-2014 |
| | | US | 2014188565 A1 | 03-07-2014 |
| US 2020057771 A1 | 20-02-2020 | CN | 106575422 A | 19-04-2017 |
| | | EP | 3178057 A1 | 14-06-2017 |
| | | JP | 6738801 B2 | 12-08-2020 |
| | | JP | 2017524199 A | 24-08-2017 |
| | | US | 2016042049 A1 | 11-02-2016 |
| | | US | 2020057771 A1 | 20-02-2020 |
| | | WO | 2016022983 A1 | 11-02-2016 |

EPO FORM P0459

For more details about this annex : see Official Journal of the European Patent Office, No. 12/82